# EUROPEAN PATENT APPLICATION

(11) **EP 4 606 497 A1**
(43) Date of publication of application: **27.08.2025**
(21) Application number: 23879717.9
(22) Date of filing: 13.10.2023
(51) Int. Cl.: B21D 5/02

(54) **PRESS BRAKE AND PRESS BRAKE CONTROL METHOD**

(30) Priority: 21.10.2022 JP 2022169403; 04.09.2023 JP 2023143043
(71) Applicant: Amada Co., Ltd., Isehara-shi, Kanagawa 259-1196 (JP)
(72) Inventor: AMANO, Kanehide, Isehara-shi, Kanagawa 259-1196 (JP); UESUGI, Satoru, Isehara-shi, Kanagawa 259-1196 (JP); SUGAI, Koichiro, Isehara-shi, Kanagawa 259-1196 (JP); SASAKI, Hideki, Isehara-shi, Kanagawa 259-1196 (JP); ARIJI, Nobuaki, Isehara-shi, Kanagawa 259-1196 (JP)
(74) Representative: Grünecker Patent- und Rechtsanwälte PartG mbB
(86) International application number: PCT/JP2023/037142
(87) International publication number: WO 2024/085074

(57) **Abstract**

A control device (NC device (10)) performs control to bend a first sheet metal that is a first sheet metal (W) and a second sheet metal that is a second sheet metal (W) and thereafter of a plurality of sheet metals W. The control device determines whether a difference between, a fourth bending angle obtained by temporarily bending the second sheet metal, and a first bending angle obtained by temporarily bending the first sheet metal, is within a predetermined angle. If the difference between the fourth bending angle and the first bending angle is within the predetermined angle, the control device does not calculate a spring back amount of the second sheet metal, but lowers an upper table (1) by a second depth value at the time of a driving operation of the first sheet metal or by a corrected depth value obtained by correcting the second depth value according to the difference between the fourth bending angle and the first bending angle.

## Description

### [TECHNICAL FIELD]

The present disclosure relates to a press brake and a press brake control method.

### [BACKGROUND ART]

A press brake includes an upper table on which a punch is mounted and a lower table on which a die is mounted. The upper table is lowered to the lower table, and a sheet metal arranged on the die is interposed between the punch and the die and is bent (see Patent Literature 1).

### [Citation List]

### [Patent Literature]

[Patent Literature 1] Japanese Patent No. 4280332

### [SUMMARY OF INVENTION]

Even if a press brake bends a sheet metal to have a target bending angle, a bending angle of the bent sheet metal becomes wider than the target bending angle due to spring back. Therefore, in order to bend the sheet metal to have the target bending angle, it is necessary to bend the sheet metal to have a bending angle which is narrower than the target bending angle in consideration of the spring back amount.

In some cases, a plurality of sheet metals which are made of the same material and which have the same thickness are continuously bent. In such a case, the spring back amount is calculated each time each sheet metal is bent. This requires a considerable time for bending the plurality of sheet metals. It is desirable to reduce the processing time when the plurality of sheet metals are bent as much as possible.

A first aspect of one or more embodiments provides a press brake including: an upper table on which a punch is mounted; a lower table on which a die is mounted; a table lifting mechanism that raises and lowers the upper table or the lower table; an angle sensor that measures an angle of a sheet metal, when the table lifting mechanism raises and lowers the upper table or the lower table and bends the sheet metal, while the sheet metal is interposed between the punch and the die; and a control device that calculates a bending angle of the sheet metal based on an angle of the sheet metal measured by the angle sensor and that controls the table lifting mechanism to lower the upper table or to raise the lower table.

In the first aspect, when the control device performs control to bend a first sheet metal of a plurality of sheet metals that are made of the same material and that have the same thickness, the control device performs control to lower the upper table by a first depth value or to raise the lower table by the first depth value such that the first sheet metal is bent to have a temporary bending angle wider than a target bending angle, while the upper table is lowered by the first depth value or the lower table is raised by the first depth value, the control device calculates a first bending angle of the first sheet metal based on an angle of the first sheet metal measured by the angle sensor and holds the first bending angle, the control device removes a load applied to the first sheet metal, while keeping a state in which the punch is in contact with the first sheet metal, and calculates a second bending angle of the first sheet metal of which the load is removed, based on the angle of the first sheet metal measured by the angle sensor, using the first bending angle or a bending angle when the first sheet metal is bent to have a bending angle narrower than the first bending angle before the load applied to the first sheet metal is removed as a reference angle for calculating a spring back amount, the control device calculates a first spring back amount of the first sheet metal based on a difference between the second bending angle and the reference angle, while the upper table is lowered or the lower table is raised, the control device calculates a third bending angle of the first sheet metal based on the angle of the first sheet metal measured by the angle sensor such that the first sheet metal of which the load is removed is bent to have a bending angle wider than the target bending angle, based on the target bending angle and the first spring back amount, the control device calculates a second depth value for bending the first sheet metal, that has been bent to have the third bending angle, to have the target bending angle, based on the target bending angle, the first spring back amount, and the third bending angle and holds the second depth value, and the control device performs control to lower the upper table by the second depth value or to raise the lower table by the second depth value, and after the first sheet metal is bent to have the target bending angle, the control device raises the upper table or lowers the lower table and ends bending of the first sheet metal.

In the first aspect, when the control device performs control to bend a second sheet metal that is a second sheet metal and thereafter of the plurality of sheet metals, the control device performs control to lower the upper table by the first depth value or to raise the lower table by the first depth value such that the second sheet metal is bent to have the temporary bending angle, while the upper table is lowered by the first depth value or the lower table is raised by the first depth value, the control device calculates a fourth bending angle of the second sheet metal based on an angle of the second sheet metal measured by the angle sensor, the control device determines whether a difference between the fourth bending angle and the first bending angle is within a predetermined angle, and if the difference between the fourth bending angle and the first bending angle is within the predetermined angle, the control device does not calculate a spring back amount of the second sheet metal, but performs control to lower the upper table by the second depth value or by a corrected depth value obtained by correcting the second depth value according to the difference between the fourth bending angle and the first bending angle, or performs control to raise the lower table by the second depth value or by the corrected depth value, and after the second sheet metal, that has been bent to have the temporary bending angle, is bent to have the target bending angle, the control device raises the upper table or lowers the lower table and ends bending of the second sheet metal.

According to the first aspect of one or more embodiments, when the control device performs control to bend the second sheet metal, it is possible to omit calculation of the spring back amount of the second sheet metal. This can reduce the processing time when the plurality of sheet metals are bent.

A second aspect of one or more embodiments provides a press brake control method performed by a control device that controls a press brake including: an upper table on which a punch is mounted; a lower table on which a die is mounted; a table lifting mechanism that raises and lowers the upper table or the lower table; and an angle sensor that measures an angle of a sheet metal which is interposed between the punch and the die and is bent, and in the press brake control method, the control device controls the press brake as follows.

In the press brake control method of the second aspect, the following are performed by the control device: when performing control to bend a first sheet metal of a plurality of sheet metals that are made of the same material and that have the same thickness; performing control to lower the upper table by a first depth value or to raise the lower table by the first depth value such that the first sheet metal is bent to have a temporary bending angle wider than a target bending angle; while the upper table is lowered by the first depth value or the lower table is raised by the first depth value, calculating a first bending angle of the first sheet metal based on an angle of the first sheet metal measured by the angle sensor and holding the first bending angle; removing a load applied to the first sheet metal, while keeping a state in which the punch is in contact with the first sheet metal, and calculating a second bending angle of the first sheet metal of which the load is removed, based on the angle of the first sheet metal measured by the angle sensor; using the first bending angle or a bending angle when the first sheet metal is bent to have a bending angle narrower than the first bending angle before the load applied to the first sheet metal is removed as a reference angle for calculating a spring back amount, calculating a first spring back amount of the first sheet metal based on a difference between the second bending angle and the reference angle; while the upper table is lowered or the lower table is raised, calculating a third bending angle of the first sheet metal based on the angle of the first sheet metal measured by the angle sensor such that the first sheet metal of which the load is removed is bent to have a bending angle wider than the target bending angle, based on the target bending angle and the first spring back amount; calculating a second depth value for bending the first sheet metal, that has been bent to have the third bending angle, to have the target bending angle, based on the target bending angle, the first spring back amount, and the third bending angle, and holding the second depth value; and performing control to lower the upper table by the second depth value or to raise the lower table by the second depth value, and after bending the first sheet metal to have the target bending angle, raising the upper table or lowering the lower table and ending bending of the first sheet metal.

In the press brake control method of the second aspect, the following are performed by the control device: when performing control to bend a second sheet metal that is a second sheet metal and thereafter of the plurality of sheet metals; performing control to lower the upper table by the first depth value or to raise the lower table by the first depth value such that the second sheet metal is bent to have the temporary bending angle; while the upper table is lowered by the first depth value or the lower table is raised by the first depth value, calculating a fourth bending angle of the second sheet metal based on an angle of the second sheet metal measured by the angle sensor; determining whether a difference between the fourth bending angle and the first bending angle is within a predetermined angle; and if the difference between the fourth bending angle and the first bending angle is within the predetermined angle, without calculating a spring back amount of the second sheet metal, performing control to lower the upper table by the second depth value or by a corrected depth value obtained by correcting the second depth value according to the difference between the fourth bending angle and the first bending angle, or performing control to raise the lower table by the second depth value or by the corrected depth value, and after the second sheet metal, that has been bent to have the temporary bending angle, is bent to have the target bending angle, raising the upper table or lowering the lower table and ending bending of the second sheet metal.

According to the second aspect of one or more embodiments, when the control device performs control to bend the second sheet metal, it is possible to omit calculation of the spring back amount of the second sheet metal. This can reduce the processing time when the plurality of sheet metals are bent.

In accordance with a press brake and a press brake control method according to one or more embodiments, it is possible to reduce the processing time when a plurality of sheet metals are bent.

### [BRIEF DESCRIPTION OF DRAWINGS]

[FIG. 1] FIG. 1 is a diagram illustrating an overall configuration of a press brake according to one or more embodiments.
[FIG. 2] FIG. 2 is a diagram illustrating configuration examples of angle sensors of the press brake according to one or more embodiments.
[FIG. 3] FIG. 3 is a diagram illustrating an angle of a sheet metal detected by the angle sensors shown in FIG. 2.
[FIG. 4] FIG. 4 is a diagram illustrating an example of a control operation performed by an NC device of the press brake according to one or more embodiments when a first sheet metal is bent.
[FIG. 5] FIG. 5 is a diagram illustrating a temporary bending operation performed by the NC device of the press brake according to one or more embodiments when a second sheet metal and thereafter are bent.
[FIG. 6] FIG. 6 is a diagram illustrating a control operation performed by the NC device of the press brake according to one or more embodiments, and in FIG. 6, **a** calculation operation of the spring back amount when the second sheet metal and thereafter are bent is omitted.
[FIG. 7] FIG. 7 is a diagram illustrating a control operation performed by the NC device of the press brake according to one or more embodiments, and in FIG. 7, a calculation operation of the spring back amount when the second sheet metal and thereafter are bent is not omitted
[FIG. 8A] FIG. 8A is a diagram illustrating a first modified example of a calculation operation of the spring back amount when the second sheet metal and thereafter are bent by the NC device of the press brake according to one or more embodiments.
[FIG. 8B] FIG. 8B is a diagram illustrating a second modified example of a calculation operation of the spring back amount when the second sheet metal and thereafter are bent by the NC device of the press brake according to one or more embodiments.
[FIG. 9] FIG. 9 is a diagram illustrating, a control operation when the second sheet metal and thereafter are bent, by using the spring back amount obtained when the first sheet metal is bent, the control operation is performed the NC device of the press brake according to one or more embodiments, and in FIG. 9, a calculation operation of the spring back amount when the second sheet metal and thereafter are bent is omitted.
[FIG. 10] FIG. 10 is a flowchart illustrating an operation performed by the press brake according to one or more embodiments and a press brake control method according to one or more embodiments performed by the press brake.
[FIG. 11] FIG. 11 is a partial flowchart illustrating a modified example of an operation performed by the press brake according to one or more embodiments and a press brake control method according to one or more embodiments performed by the press brake.

### [DESCRIPTION OF EMBODIMENTS]

A press brake according to one or more embodiments includes: an upper table on which a punch is mounted; a lower table on which a die is mounted; a table lifting mechanism that raises and lowers the upper table or the lower table; an angle sensor that measures an angle of a sheet metal, when the table lifting mechanism raises and lowers the upper table or the lower table and bends the sheet metal, while the sheet metal is interposed between the punch and the die; and a control device that calculates a bending angle of the sheet metal based on an angle of the sheet metal measured by the angle sensor and that controls the table lifting mechanism to lower the upper table or to raise the lower table.

When the control device performs control to bend a first sheet metal of a plurality of sheet metals that are made of the same material and that have the same thickness, the control device performs control to lower the upper table by a first depth value or to raise the lower table by the first depth value such that the first sheet metal is bent to have a temporary bending angle wider than a target bending angle, while the upper table is lowered by the first depth value or the lower table is raised by the first depth value, the control device calculates a first bending angle of the first sheet metal based on an angle of the first sheet metal measured by the angle sensor and holds the first bending angle, the control device removes a load applied to the first sheet metal, while keeping a state in which the punch is in contact with the first sheet metal, and calculates a second bending angle of the first sheet metal of which the load is removed, based on the angle of the first sheet metal measured by the angle sensor, using the first bending angle or a bending angle when the first sheet metal is bent to have a bending angle narrower than the first bending angle before the load applied to the first sheet metal is removed as a reference angle for calculating a spring back amount, the control device calculates a first spring back amount of the first sheet metal based on a difference between the second bending angle and the reference angle, while the upper table is lowered or the lower table is raised, the control device calculates a third bending angle of the first sheet metal based on the angle of the first sheet metal measured by the angle sensor such that the first sheet metal of which the load is removed is bent to have a bending angle wider than the target bending angle, based on the target bending angle and the first spring back amount, the control device calculates a second depth value for bending the first sheet metal, that has been bent to have the third bending angle, to have the target bending angle, based on the target bending angle, the first spring back amount, and the third bending angle and holds the second depth value, and the control device performs control to lower the upper table by the second depth value or to raise the lower table by the second depth value, and after the first sheet metal is bent to have the target bending angle, the control device raises the upper table or lowers the lower table and ends bending of the first sheet metal.

When the control device performs control to bend a second sheet metal that is a second sheet metal and thereafter of the plurality of sheet metals, the control device performs control to lower the upper table by the first depth value or to raise the lower table by the first depth value such that the second sheet metal is bent to have the temporary bending angle, while the upper table is lowered by the first depth value or the lower table is raised by the first depth value, the control device calculates a fourth bending angle of the second sheet metal based on an angle of the second sheet metal measured by the angle sensor, the control device determines whether a difference between the fourth bending angle and the first bending angle is within a predetermined angle, and if the difference between the fourth bending angle and the first bending angle is within the predetermined angle, the control device does not calculate a spring back amount of the second sheet metal, but performs control to lower the upper table by the second depth value or by a corrected depth value obtained by correcting the second depth value according to the difference between the fourth bending angle and the first bending angle, or performs control to raise the lower table by the second depth value or by the corrected depth value, and after the second sheet metal, that has been bent to have the temporary bending angle, is bent to have the target bending angle, the control device raises the upper table or lowers the lower table and ends bending of the second sheet metal.

A press brake control method according to one or more embodiments is performed by a control device that controls a press brake including: an upper table on which a punch is mounted; a lower table on which a die is mounted; a table lifting mechanism that raises and lowers the upper table or the lower table; and an angle sensor that measures an angle of a sheet metal which is interposed between the punch and the die and is bent, and in the press brake control method, the control device controls the press brake as follows.

In the press brake control method, the following are performed by the control device: when performing control to bend a first sheet metal of a plurality of sheet metals that are made of the same material and that have the same thickness; performing control to lower the upper table by a first depth value or to raise the lower table by the first depth value such that the first sheet metal is bent to have a temporary bending angle wider than a target bending angle; while the upper table is lowered by the first depth value or the lower table is raised by the first depth value, calculating a first bending angle of the first sheet metal based on an angle of the first sheet metal measured by the angle sensor and holding the first bending angle; removing a load applied to the first sheet metal, while keeping a state in which the punch is in contact with the first sheet metal, and calculating a second bending angle of the first sheet metal of which the load is removed, based on the angle of the first sheet metal measured by the angle sensor; using the first bending angle or a bending angle when the first sheet metal is bent to have a bending angle narrower than the first bending angle before the load applied to the first sheet metal is removed as a reference angle for calculating a spring back amount, calculating a first spring back amount of the first sheet metal based on a difference between the second bending angle and the reference angle; while the upper table is lowered or the lower table is raised, calculating a third bending angle of the first sheet metal based on the angle of the first sheet metal measured by the angle sensor such that the first sheet metal of which the load is removed is bent to have a bending angle wider than the target bending angle, based on the target bending angle and the first spring back amount; calculating a second depth value for bending the first sheet metal, that has been bent to have the third bending angle, to have the target bending angle, based on the target bending angle, the first spring back amount, and the third bending angle, and holding the second depth value; and performing control to lower the upper table by the second depth value or to raise the lower table by the second depth value, and after bending the first sheet metal to have the target bending angle, raising the upper table or lowering the lower table and ending bending of the first sheet metal.

In the press brake control method, the following are performed by the control device: when performing control to bend a second sheet metal that is a second sheet metal and thereafter of the plurality of sheet metals; performing control to lower the upper table by the first depth value or to raise the lower table by the first depth value such that the second sheet metal is bent to have the temporary bending angle; while the upper table is lowered by the first depth value or the lower table is raised by the first depth value, calculating a fourth bending angle of the second sheet metal based on an angle of the second sheet metal measured by the angle sensor; determining whether a difference between the fourth bending angle and the first bending angle is within a predetermined angle; and if the difference between the fourth bending angle and the first bending angle is within the predetermined angle, without calculating a spring back amount of the second sheet metal, performing control to lower the upper table by the second depth value or by a corrected depth value obtained by correcting the second depth value according to the difference between the fourth bending angle and the first bending angle, or performing control to raise the lower table by the second depth value or by the corrected depth value, and after the second sheet metal, that has been bent to have the temporary bending angle, is bent to have the target bending angle, raising the upper table or lowering the lower table and ending bending of the second sheet metal.

The press brake and the press brake control method according to one or more embodiments will be specifically described below with reference to the accompanying drawings.

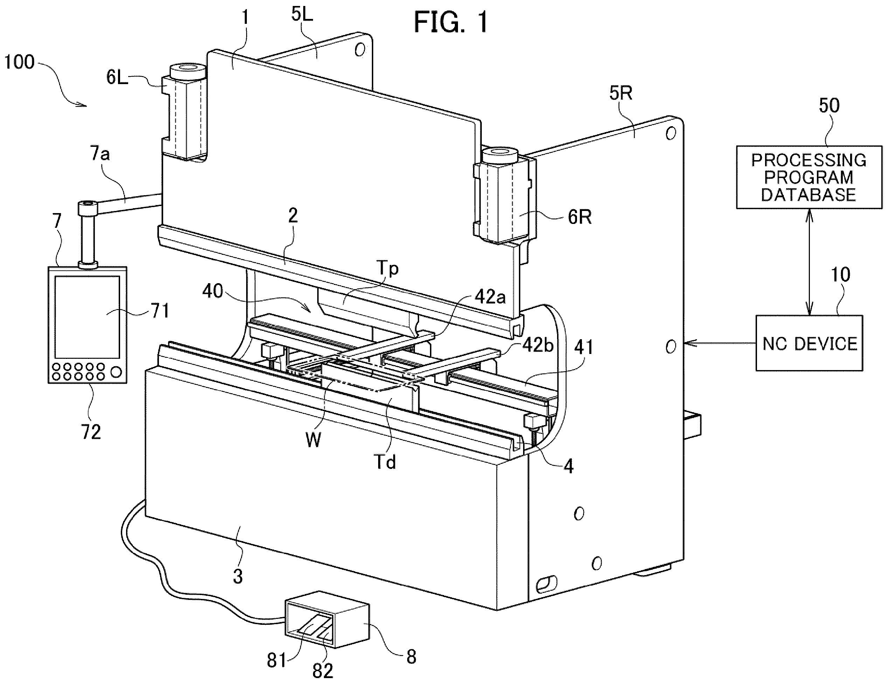

FIG. 1 shows an overall configuration of a press brake 100 according to one or more embodiments. As shown in FIG. 1, the press brake 100 includes a Numerical Control (NC) device 10 functioning as a control device for controlling the press brake 100. A processing program database 50 is connected to the NC device 10 via a network. The press brake 100 includes an upper table 1, a lower table 3, and right and left side plates 5R and 5L. An upper tool holder 2 is attached to the upper table 1, and a lower tool holder 4 is attached to the lower table 3.

The upper table 1 is configured to be raised and lowered by hydraulic cylinders 6L and 6R disposed on left and right sides thereof. The hydraulic cylinders 6L and 6R will be referred to as a table lifting mechanism 6. The table lifting mechanism 6 may include actuators other than the hydraulic cylinders 6L and 6R. The table lifting mechanism 6 lowers the upper table 1 such that the upper table 1 approaches the lower table 3, or raises the upper table 1 such that the upper table 1 is separated from the lower table 3.

A punch Tp which is an upper tool is mounted on the upper tool holder 2, and a die Td which is a lower tool is mounted on the lower tool holder 4. FIG. 1 shows a modular type in which the upper tool holder 2 is integrally attached over an entire length of a lower end of the upper table 1. However, alternatively an intermediate plate type may be adopted in which a plurality of intermediate plates for mounting the punch Tp are attached to the lower end of the upper table 1 in a longitudinal direction. The intermediate plates are also the upper tool holder.

Mounting the punch Tp on the upper table 1 means mounting the punch Tp on the upper tool holder 2 or the intermediate plates. Mounting the die Td on the lower table 3 means mounting the die Td on the lower tool holder 4. Two or more punches Tp may be mounted in line on the upper table 1, and two or more dies Td may be mounted in line on the lower table 3.

A back gauge 40 is arranged on a back side of the lower table 3. The back gauge 40 has abutments 42a and 42b which move in a horizontal direction along a back gauge carriage 41. Although FIG. 1 shows two abutments that are the abutments 42a and 42b, the number of abutments is not limited to two. The abutments 42a and 42b are configured to move in a height direction and in a front-back direction also.

Before an operator arranges a sheet metal W to be processed on the die Td and the sheet metal W is bent, the abutments 42a and 42b move to a position corresponding to the die Td. The operator arranges the sheet metal W on the die Td such that an end of the sheet metal W on a back side abuts the abutments 42a and 42b. That is, the abutments 42a and 42b act to determine a position of the sheet metal W in a front-back direction when the sheet metal W is arranged on the die Td.

An operation pendant 7 having a display 71 and an operation unit 72 with a plurality of operation buttons is attached on a left side of the press brake 100 in the horizontal direction via an arm 7a. The operation pendant 7 is connected to the NC device 10. The NC device 10 is connected to a foot switch 8 having a closing foot switch 81 for lowering the upper table 1 and an opening foot switch 82 for raising the upper table 1.

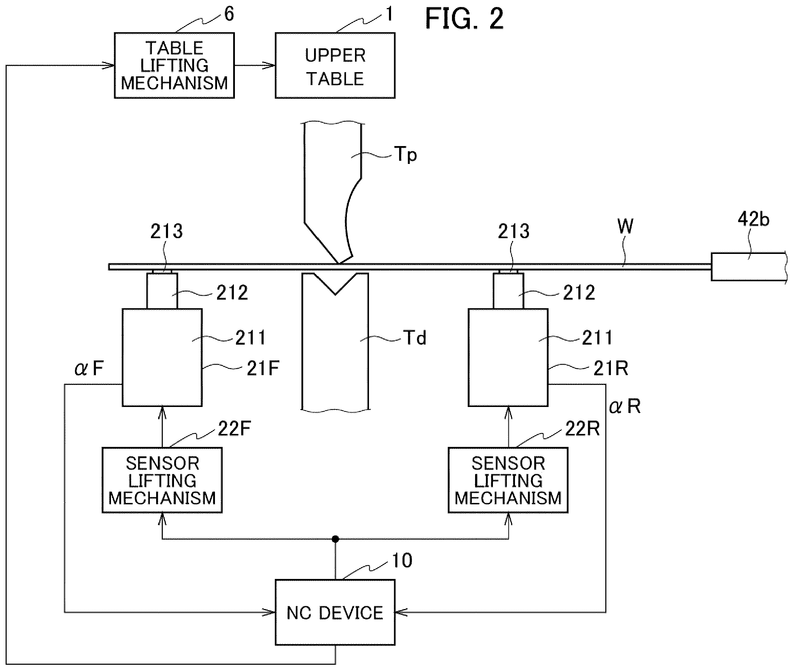

FIG. 2 shows configuration examples of angle sensors of the press brake 100. Although FIG. 1 does not show the angle sensors, as shown in FIG. 2, the press brake 100 includes angle sensors 21F and 21R for measuring an angle of the sheet metal W when the sheet metal W is bent. The angle sensor 21F is arranged on the front side of the die Td, and the angle sensor 21R is arranged on the rear side of the die Td. The angle sensors 21F and 21R are what is referred to as contact angle sensors. The angle sensors 21F and 21R are configured to be raised and lowered by sensor lifting mechanisms 22F and 22R, respectively. When it is necessary to measure an angle of the sheet metal W, the angle sensors 21F and 21R below the sheet metal W are moved upward by the sensor lifting mechanisms 22F and 22R according to the control by the NC device 10.

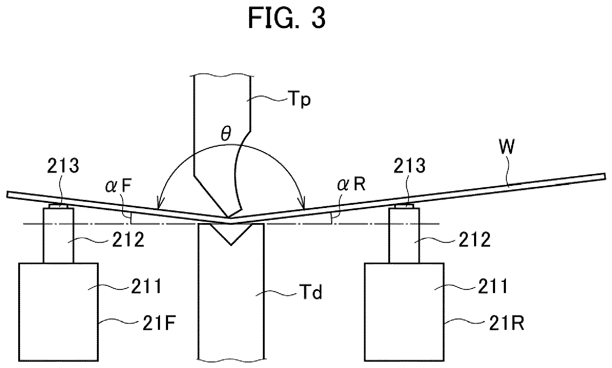

Each of the angle sensors 21F and 21R includes a main body 211 and a protrusion 212 which can be freely protruded from the main body 211. A slightly protruding distal end 213 is disposed on an upper end of the protrusion 212. As shown in FIG. 2, before processing to bend the sheet metal W starts, protrusion states of the protrusions 212 of the angle sensors 21F and 21R are minimum. FIG. 3 shows an angle of the sheet metal W detected by the angle sensors 21F and 21R. As shown in FIG. 3, when the punch Tp is lowered and the sheet metal W is bent, the protrusion 212 protrudes upward in accordance with the upward displacement of the sheet metal W.

As shown in FIG. 3, using a plane indicated by a dash-dot-dash line obtained by extending an upper end surface of the die Td as a reference plane, an angle of the sheet metal W measured by the angle sensor 21F is an angle αF formed between the reference plane and a portion of the sheet metal W on the front side of the punch Tp and the die Td. An angle of the sheet metal W measured by the angle sensor 21R is an angle αR formed between the reference plane and a portion of the sheet metal W on the rear side of the punch Tp and the die Td. As shown in FIG. 2, the angles αF and αR measured by the angle sensors 21F and 21R, respectively are input to the NC device 10. The NC device 10 calculates a bending angle θ of the sheet metal W shown in FIG. 3 based on a calculation formula 180 - αF - αR.

Angle sensors for measuring an angle of the sheet metal W are not limited to contact angle sensors, but may be laser angle sensors. When the laser angle sensors are used as the angle sensors, it is not necessary to dispose the sensor lifting mechanisms 22F and 22R, and the laser angle sensors on the front side and on the rear side are located at fixed positons in the height direction. The laser angle sensors on the front side and on the rear side have laser emitting units for irradiating portions of the sheet metal W on the front side and on the rear side of the punch Tp and the die Td with linear laser beams, and imaging units for imaging the linear laser beams used to irradiate the sheet metal W. The NC device 10 calculates the bending angle θ of the sheet metal W by calculating angles of the sheet metal W corresponding to the angles αF and αR based on angles of the linear laser beams in images imaged by the imaging units.

A description will be given regarding a control operation performed by the NC device 10 when the press brake 100 configured as above continuously bends a plurality of sheet metals W which are made of the same material and which have the same thickness. The sheet metals W which are made of the same material and which have the same thickness are sheet metals which are sold as being made of the same material and which are sold as having the same thickness. In reality, even if sheet metals are sold as being made of the same material and having the same thickness, the thickness of the sheet metals may vary, and material properties such as Young's modulus may also vary.

### <Bending of first sheet metal W>

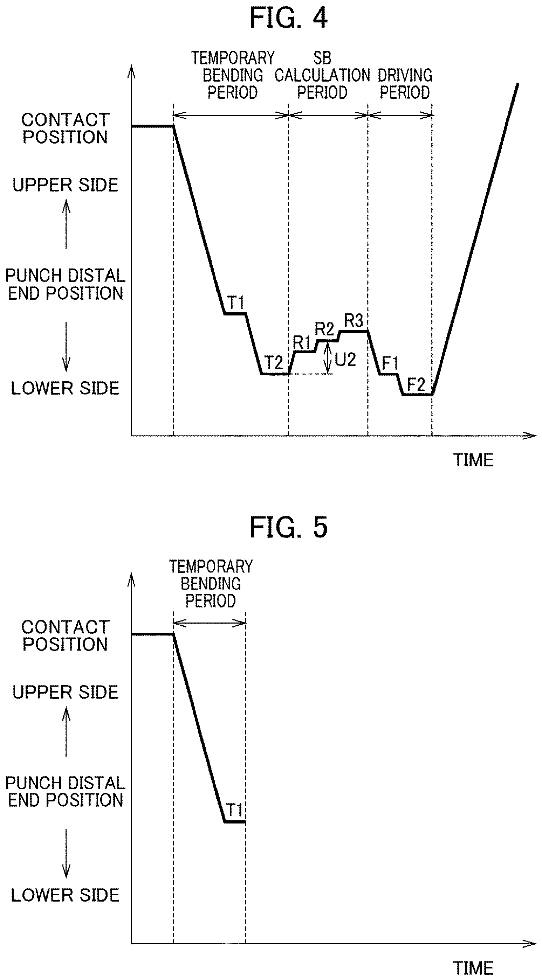

FIG. 4 shows an example of a control operation performed by the NC device 10 when a first sheet metal W (first sheet metal) is bent. In FIGS. 4 to 7 and 9, a horizontal axis indicates time, and a vertical axis indicates a position of a distal end of the punch Tp in the height direction. In FIGS. 4 to 7 and 9, the vertical axis direction is enlarged to facilitate understanding of a change in the position of the distal end of the punch Tp in the height direction. In FIG. 4, a distance between a position R3 and a position F2 is about 0.1 mm to 0.2 mm. Further, a distance between a contact position, which will be described later, and the position F2 is about 2 mm to 3 mm.

It is assumed that a target bending angle of the sheet metal W is 90 degrees, for example. The NC device 10 controls raising and lowering of the upper table 1 as shown in FIG. 4 such that the sheet metal W is bent to have the target bending angle of 90 degrees. When the NC device 10 starts lowering the upper table 1, the distal end of the punch Tp contacts the sheet metal W. The contact position is a position in the height direction in which the distal end of the punch Tp contacts the sheet metal W. The NC device 10 stops the upper table 1, while the distal end of the punch Tp is located at the contact position shown in FIG. 4, and separates the abutments 42a and 42b from the sheet metal W.

During a temporary bending period after the distal end of the punch Tp contacts the sheet metal W, the NC device 10 lowers a position of the distal end of the punch Tp to a position T1, and the distal end temporarily stops at the position T1. The position T1 is a theoretical calculation position for bending the sheet metal W to have a predetermined temporary bending angle which is wider than the target bending angle of 90 degrees. A first depth value of the punch Tp for bending the sheet metal W to have the temporary bending angle at the position T1 after the distal end of the punch Tp contacts the sheet metal W is determined in advance based on a bending theory. The depth value is the lowering amount of the punch Tp when the contact position where the distal end of the punch Tp contacts the sheet metal W is used as a reference. In other words, the depth value indicates the position of the distal end of the punch Tp in the height direction. Hereinafter, the depth value is abbreviated as a D value.

The NC device 10 calculates a bending angle θt1 (first bending angle) of the sheet metal W based on an angle of the sheet metal W measured by the angle sensors 21F and 21R when the punch Tp is lowered by a first D value such that the position of the distal end of the punch Tp is the position T1. The NC device 10 holds the bending angle θt1 which is calculated during a temporary bending period of the first sheet metal W.

In an example shown in FIG. 4, the NC device 10 further lowers the position of the distal end of the punch Tp to a position T2 during the temporary bending period. The position T2 is a calculation position for bending the sheet metal W to have a bending angle θt2 which is closer to the target bending angle of 90 degrees than the bending angle θt1. The NC device 10 calculates and holds the bending angle θt2 of the sheet metal W, when the punch Tp is lowered by a predetermined D value, such that the position of the distal end of the punch Tp is the position T2. The bending angle θt2 at the position T2 is a reference angle for calculating the spring back amount which will be described later.

In FIG. 4, the upper table 1 (punch Tp) is lowered in two steps during the temporary bending period, but the number of lowering steps is not limited to two. The position of the distal end of the punch Tp may be lowered to the position T1 in one step, or may be lowered in three or more steps. In the former case, the bending angle θt1 at the position T1 is a reference angle for calculating the spring back amount. In the latter case, a bending angle at a final position is a reference angle for calculating the spring back amount. In this way, the reference angle may be the bending angle θt1, or may be a bending angle (for example, bending angle θt2) when the sheet metal W is bent to have a bending angle narrower than the bending angle θt1, before a load applied to the sheet metal W is removed.

After the sheet metal W is bent to have the bending angle θt2, the NC device 10 switches a period of the press brake 100 to a spring back calculation period (hereinafter referred to as SB calculation period). During the SB calculation period, the NC device 10 controls the upper table 1 to be raised in a plurality of steps in order to remove a load of the sheet metal W, while keeping a state in which the punch Tp is in contact with the sheet metal W. An expression "remove a load" means that a load applied to the sheet metal W is removed.

In FIG. 4, the NC device 10 raises the position of the distal end of the punch Tp to a position R1, the distal end temporarily stops at the position R1, and the NC device 10 calculates a bending angle θr1 of the sheet metal W based on an angle of the sheet metal W measured by the angle sensors 21F and 21R. Subsequently, the NC device 10 raises the position of the distal end of the punch Tp to a position R2, the distal end temporarily stops at the position R2, and the NC device 10 calculates a bending angle θr2 of the sheet metal W. At this time, if the difference between the bending angle θr1 and the bending angle θr2 is a threshold value or less, this means that the load removal of the sheet metal W ends. FIG. 4 shows an example in which the difference between the bending angle θr1 and the bending angle θr2 is larger than a threshold value at the position R2, and the load removal of the sheet metal W does not end at the position R2.

Therefore, the NC device 10 raises the position of the distal end of the punch Tp to the position R3, the distal end temporarily stops at the position R3, and the NC device 10 calculates a bending angle θr3 of the sheet metal W. The difference between the bending angle θr2 and the bending angle θr3 is a threshold value or less at the position R3, and the load removal of the sheet metal W ends at the position R3.

The number of steps required to end the removal of the load applied to the sheet metal W differs depending on various conditions such as a distance between the position T2 and the position R1 and a distance between the position R1 and the position R2. FIG. 4 shows a coarse step in which the distance between the positions R1, R2, and R3 is relatively long. However, a fine step may be adopted in which a distance for raising the position of the distal end of the punch Tp at one time is finely set. In this case, the NC device 10 continuously repeats processing of raising the position of the distal end of the punch Tp by a fine distance and calculating a bending angle of the sheet metal W. If the fine distance is a constant distance, a bending angle of the sheet metal W at each time point is calculated, while the position of the distal end of the punch Tp raises substantially linearly, in detail, while the position raises strictly in the manner of fine steps.

In this way, the NC device 10 calculates the bending angle θr3 (second bending angle) of the sheet metal W in a state in which the load applied to the sheet metal W is removed during the SB calculation period. Even if the sheet metal W is bent to have the bending angle θt2 during the temporary bending period, when the load applied to the sheet metal W is removed during the SB calculation period, a bending angle becomes wide due to the spring back. The bending angle θr3 is a bending angle of the sheet metal W which becomes wide due to the spring back. The NC device 10 calculates the spring back amount (first spring back amount) by subtracting the bending angle θt2 from the bending angle θr3.

If it is possible to obtain the spring back amount based on the difference between the bending angle θr3 and the bending angle θt2 during the SB calculation period, the NC device 10 switches a period of the press brake 100 to a driving period. The NC device 10 calculates a D value for bending the sheet metal W to have the target bending angle in consideration of the spring back amount. Simply, it is considered that if the spring back amount is 2 degrees, the NC device 10 sets the target bending angle to be 88 degrees, and lowers the upper table 1 by the lowering amount in which the sheet metal W can be bent to have the bending angle of 88 degrees. However, since the spring back amount generally differs depending on a target bending angle, even if the spring back amount obtained during the SB calculation period is used without any changes, and a target bending angle is set, the target bending angle may not be 90 degrees.

Therefore, it is preferable that the NC device 10 corrects the spring back amount obtained during the SB calculation period first, and then calculates a D value for bending the sheet metal W to have a set target bending angle, instead of using the spring back amount obtained during the SB calculation period without any changes.

Specifically, the NC device 10 lowers the position of the distal end of the punch Tp from the position R3 to a position F1. The position F1 is a theoretical calculation position for bending the sheet metal W to have a bending angle slightly wider than the target bending angle of 90 degrees in consideration of the spring back amount (preferably, corrected spring back amount). In this way, the NC device 10 lowers the upper table 1 such that the sheet metal W of which a load is removed is bent to have a bending angle wider than the target bending angle, based on the target bending angle and the spring back amount, and sets the position of the distal end of the punch Tp to be the position F1. While the position of the distal end of the punch Tp is located at the position F1, the NC device 10 calculates a bending angle θf1 (third bending angle) of the sheet metal W based on an angle of the sheet metal W measured by the angle sensors 21F and 21R.

The NC device 10 further lowers the position of the distal end of the punch Tp to the position F2. The position F2 is a calculation position for bending the sheet metal W to have the target bending angle of 90 degrees in consideration of the spring back amount (corrected spring back amount). While the position of the distal end of the punch Tp is located at the position F1, the NC device 10 obtains and holds a second D value for bending a sheet metal W, which has been bent to have the bending angle θf1, to have the target bending angle of 90 degrees, based on the target bending angle, the spring back amount, and the bending angle θf1. The NC device 10 lowers the upper table 1 by the obtained second D value, performs a final driving operation, and sets the position of the distal end of the punch Tp to be the position F2. The number of steps of a driving operation during the driving period is not limited to two.

After the sheet metal W is bent to have the target bending angle, the NC device 10 controls the table lifting mechanism 6 to raise the upper table 1. Accordingly, bending of the first sheet metal W ends.

### <Bending of second sheet metal W and thereafter>

FIG. 5 shows a temporary bending operation when a second sheet metal W and thereafter (second sheet metal) are bent. As shown in FIG. 5, when the second sheet metal W and thereafter are bent, the NC device 10 controls the table lifting mechanism 6 to lower the upper table 1 by the first D value, such that the position of the distal end of the punch Tp is lowered to the position T1 during the temporary bending period after the distal end of the punch Tp contacts the sheet metal W. The first D value has the same value as the first D value used during the temporary bending period of the first sheet metal W. The position T1 in FIG. 5 is the same as the position T1 in FIG. 4.

In a state in which the position of the distal end of the punch Tp is located at the position T1, and the sheet metal W is bent to have the temporary bending angle, the NC device 10 calculates a bending angle θt1 (fourth bending angle) of the sheet metal W based on an angle of the sheet metal W measured by the angle sensors 21F and 21R. The NC device 10 holds the bending angle θt1.

The NC device 10 subtracts the bending angle θt1 (first bending angle) obtained in the temporary bending operation when the first sheet metal W is bent, from the bending angle θt1 (fourth bending angle) obtained in the temporary bending operation when the second sheet metal W and thereafter are bent, and determines whether the difference between the two bending angles is within ± Δθ, for example. The Δθ may be set to a predetermined angle to the extent that the two bending angles θt1 are determined to have little difference therebetween.

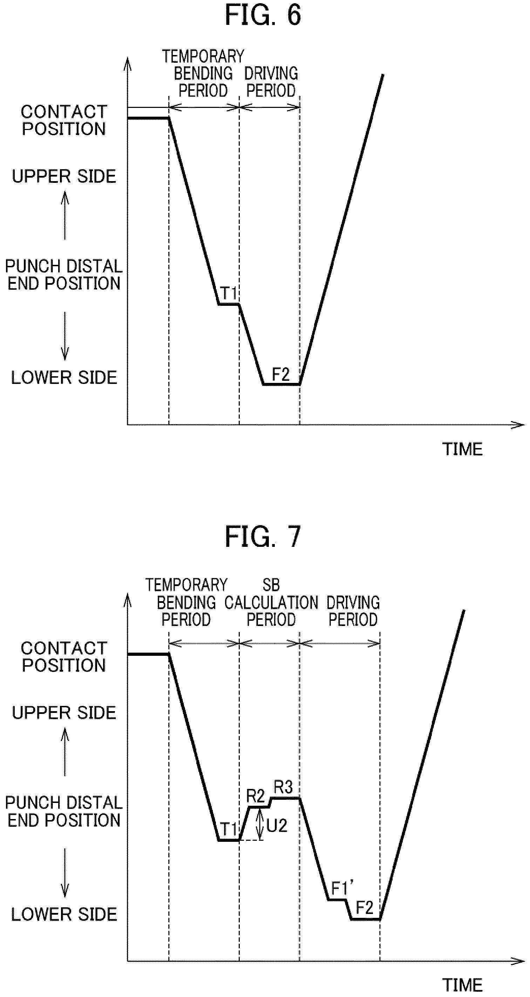

If the difference between both bending angles is within ± Δθ, it is considered that there is little variation in the thickness or material properties between the first sheet metal W and the second sheet metal W and thereafter. Therefore, as shown in FIG. 6, a calculation operation of the spring back amount during the SB calculation period is omitted, and the NC device 10 immediately switches a period from the temporary bending period to a driving operation during a driving period. The NC device 10 lowers the upper table 1 by the second D value during the driving period when the first sheet metal W is bent and lowers the position of the distal end of the punch Tp from the position T1 to the position F2 at one time. In this way, the sheet metal W is bent to have the target bending angle of 90 degrees by performing a one-step final driving operation of lowering the position of the distal end of the punch Tp from the position T1 to the position F2.

It is assumed that the difference obtained by subtracting the bending angle θt1 obtained in the temporary bending operation when the first sheet metal W is bent, from the bending angle θt1 obtained in the temporary bending operation when the second sheet metal W and thereafter are bent, is set as the difference dt1. It is also assumed that the difference dt1 is within ± Δθ.

During the driving period shown in FIG. 6, the upper table 1 may be lowered by a corrected D value obtained by correcting the second D value according to the difference dt1, instead of using the second D value used during the driving period when the first sheet metal W is bent without any changes. If the difference dt1 is a positive value, the NC device 10 may use a D value obtained by adding a value ΔD to the second D value as the corrected D value. Alternatively, if the difference dt1 is a negative value, the NC device 10 may use a D value obtained by subtracting the value ΔD from the second D value as the corrected D value. The value ΔD may decrease as the difference dt1 decreases, and the value ΔD may increase as the difference dt1 increases. If the corrected D value is used during the driving period, the position of the distal end of the punch Tp after the driving operation is slightly different from the position F2 when the second D value is used.

After the sheet metal W is bent to have the target bending angle, the NC device 10 controls the table lifting mechanism 6 to raise the upper table 1. This ends bending of the second sheet metal W and thereafter, when the difference between, the bending angle θt1 which is the temporary bending angle of the first sheet metal W, and the bending angle θt1 which is the temporary bending angle of the second sheet metal W and thereafter, is within ± Δθ.

If the difference between, the bending angle θt1 obtained during the temporary bending period when the second sheet metal W and thereafter are bent, and the bending angle θt1 obtained during the temporary bending period when the first sheet metal W is bent, is within ± Δθ, it is possible to omit calculation of the spring back amount of the second sheet metal W and thereafter. This can significantly reduce the time required for bending the second sheet metal W and thereafter.

Meanwhile, if the difference between the two bending angles θt1 is not within ± Δθ, it is considered that variation in the thickness or material properties between the first sheet metal W and the second sheet metal W and thereafter is large. Therefore, even if the second D value used in the final driving operation during the driving period when the first sheet metal W is bent is used without any changes and the driving operation of the first sheet metal W is performed, there is a high possibility that the target bending angle may not be 90 degrees. Therefore, as shown in FIG. 7, the SB calculation period is disposed for the NC device 10 to calculate the spring back amount, and then the NC device 10 switches the period to the driving operation during the driving period.

At this time, the NC device 10 preferably shortens the SB calculation period by reflecting, the raising amount of the upper table 1 during the SB calculation period when the first sheet metal W is bent, to the raising amount of the upper table 1 during the SB calculation period when the second sheet metal W and thereafter are bent.

In FIG. 4, the raising amount of the upper table 1 from the position T2 of the distal end of the punch Tp at the end of the temporary bending period to the position R2, which is a middle step before the position R3 where the load removal of the sheet metal W ends, is defined as the raising amount U2. As shown in FIG. 7, the NC device 10 immediately raises the upper table 1 by the raising amount U2 from the position T1 of the distal end of the punch Tp during the SB calculation period. In this way, the NC device 10 can raise the distal end of the punch Tp to the position R3 where the load removal of the sheet metal W ends in a short time.

While the load applied to the sheet metal W is removed during the SB calculation period, the NC device 10 calculates a bending angle θr3 (fifth bending angle) of the sheet metal W based on an angle of the sheet metal W measured by the angle sensors 21F and 21R. The NC device 10 calculates the spring back amount (second spring back amount) by subtracting the bending angle θt1 (fourth bending angle) from the bending angle θr3 (fifth bending angle). It is preferable that the NC device 10 corrects the spring back amount obtained during the SB calculation period first, and then calculates a D value for bending the sheet metal W to have a set target bending angle.

Specifically, the NC device 10 lowers the position of the distal end of the punch Tp from the position R3 to a position F1'. The position F1' is a theoretical calculation position for bending the sheet metal W to have a bending angle slightly wider than the target bending angle of 90 degrees in consideration of the spring back amount (preferably, corrected spring back amount). While the position of the distal end of the punch Tp is located at the position F1', The NC device 10 calculates a bending angle θf1' (sixth bending angle) of the sheet metal W based on an angle of the sheet metal W measured by the angle sensors 21F and 21R. The position F1' may be different from the position F1 in FIG. 4.

The NC device 10 further lowers the position of the distal end of the punch Tp to the position F2. The position F2 is a calculation position for bending the sheet metal W to have the target bending angle of 90 degrees in consideration of the spring back amount (corrected spring back amount). While the position of the distal end of the punch Tp is located at the position F1', the NC device 10 obtains and holds a third D value for bending a sheet metal W, which has been bent to have the bending angle θf1', to have the target bending angle of 90 degrees, based on the target bending angle, the spring back amount, and the bending angle θf1'. The NC device 10 lowers the upper table 1 by the obtained third D value, performs the final driving operation, and sets the position of the distal end of the punch Tp to be the position F2. The number of steps of the driving operation during the driving period is not limited to two.

After the sheet metal W is bent to have the target bending angle, the NC device 10 controls the table lifting mechanism 6 to raise the upper table 1. Accordingly, bending of the second sheet metal W and thereafter ends, when the difference between, the bending angle θt1 obtained during the temporary bending period when the first sheet metal W is bent, and the bending angle θt1 obtained during the temporary bending period when the second sheet metal W and thereafter are bent, is not within ± Δθ.

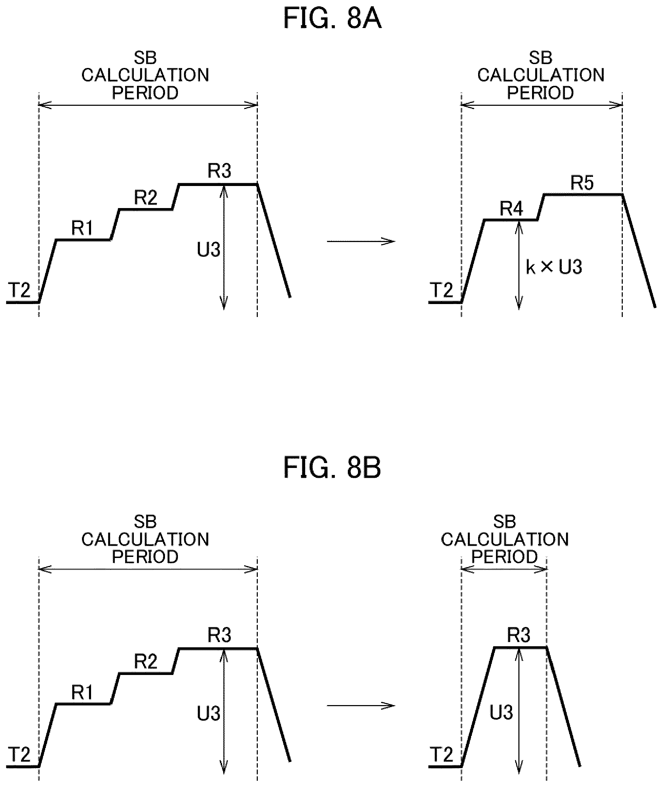

FIG. 8A shows a first modified example of a calculation operation of the spring back amount when the second sheet metal W and thereafter are bent. As shown in FIG. 8A, the raising amount of the upper table 1 from the position T2 of the distal end of the punch Tp at the end of the temporary bending period shown in FIG. 4 to the position R3 where the load removal of the sheet metal W ends is defined as the raising amount U3.

In the first modified example shown in FIG. 8A, the raising amount obtained by multiplying the raising amount U3 by a predetermined coefficient k which is less than one is set as the first raising amount R4 during the SB calculation period when the second sheet metal W and thereafter are bent. The NC device 10 can raise the distal end of the punch Tp to a position R5 where the load removal of the sheet metal W ends in a short time. The position R5 is substantially the same as the position R3.

FIG. 8B shows a second modified example of a calculation operation of the spring back amount when the second sheet metal W and thereafter are bent. In the second modified example shown in FIG. 8B, the raising amount U3 is set as the raising amount in which the upper table 1 is raised to remove the load applied to the sheet metal W in one step during the SB calculation period when the second sheet metal W and thereafter are bent. In the first or second modified example also, it is possible to shorten the SB calculation period when the second sheet metal W and thereafter are bent.

In this way, in bending of the second sheet metal W and thereafter, if the difference between, the bending angle θt1 obtained during the temporary bending period when the first sheet metal W is bent, and the bending angle θt1 obtained during the temporary bending period when the second sheet metal W and thereafter are bent, is not within ± Δθ, the spring back amount of the second sheet metal W and thereafter is calculated, and therefore the second sheet metal W and thereafter can be bent to have the target bending angle. It is possible to shorten the SB calculation period when the second sheet metal W and thereafter are bent by reflecting, the raising amount of the upper table 1 during the SB calculation period when the first sheet metal W is bent, to the raising amount of the upper table 1 during the SB calculation period when the second sheet metal W and thereafter are bent. Therefore, even if the difference is not within ± Δθ, it is possible to shorten the time required for bending the second sheet metal W and thereafter.

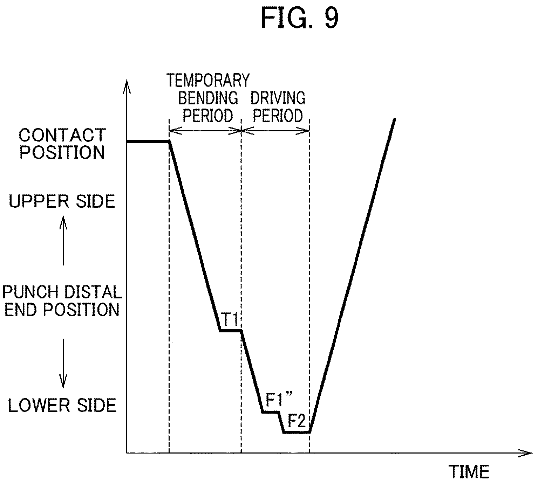

When the difference is not within ± Δθ, the NC device 10 may control the press brake 100 as shown in FIG. 9 in order to further shorten the processing time for bending the second sheet metal W and thereafter. In FIG. 9, a calculation operation of the spring back amount when the second sheet metal W and thereafter are bent is omitted, and FIG. 9 shows a control operation when the second sheet metal W and thereafter are bent by using the spring back amount obtained when the first sheet metal W is bent.

As shown in FIG. 9, a calculation operation of the spring back amount during the SB calculation period is omitted, and the NC device 10 immediately switches the period to the driving operation during the driving period. However, unlike the driving operation shown in FIG. 6 when the difference is within ± Δθ, the NC device 10 controls lowering of the upper table 1 as follows.

Using the spring back amount obtained during the SB calculation period when the first sheet metal W is bent, the NC device 10 calculates a D value such that the sheet metal W is bent to have the target bending angle of 90 degrees and performs driving.

Specifically, the NC device 10 lowers the position of the distal end of the punch Tp from the position T1 to a position F1". The position F1" is a theoretical calculation position for bending the sheet metal W to have a bending angle slightly wider than the target bending angle of 90 degrees in consideration of the spring back amount (preferably, corrected spring back amount) obtained when the first sheet metal W is bent. While the position of the distal end of the punch Tp is located at the position F1", the NC device 10 calculates a bending angle θf1" (seventh bending angle) of the sheet metal W based on an angle of the sheet metal W measured by the angle sensors 21F and 21R. The position F1" may be different from the position F1 in FIG. 4.

The NC device 10 further lowers the position of the distal end of the punch Tp to the position F2. The position F2 is a calculation position for bending the sheet metal W to have the target bending angle of 90 degrees in consideration of the spring back amount (corrected spring back amount). While the position of the distal end of the punch Tp is located at the position F1", the NC device 10 determines a fourth D value for bending a sheet metal W, which has been bent to have the bending angle θf1', to have the target bending angle of 90 degrees, based on the target bending angle, the spring back amount, and the bending angle θf1". The NC device 10 lowers the upper table 1 by the obtained fourth D value, performs the final driving operation, and sets the position of the distal end of the punch Tp to be the position F2.

The NC device 10 controls the table lifting mechanism 6 to lower the upper table 1 by the fourth D value, and lowers the position of the distal end of the punch Tp from the position F1" to the position F2. The number of steps of the driving operation is limited to two.

After the sheet metal W is bent to have the target bending angle, the NC device 10 controls the table lifting mechanism 6 to raise the upper table 1. Accordingly, it is possible further shorten the processing time for bending the second sheet metal W and thereafter, when the difference between, the bending angle θt1 obtained during the temporary bending period when the first sheet metal W is bent, and the bending angle θt1 obtained during the temporary bending period when the second sheet metal W and thereafter are bent, is not within ± Δθ.

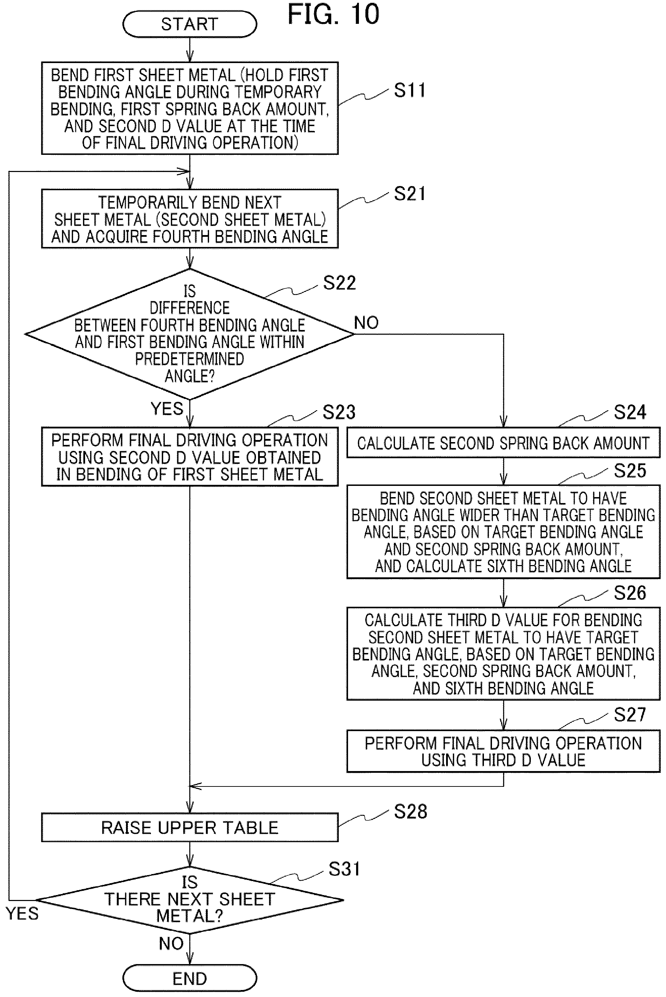

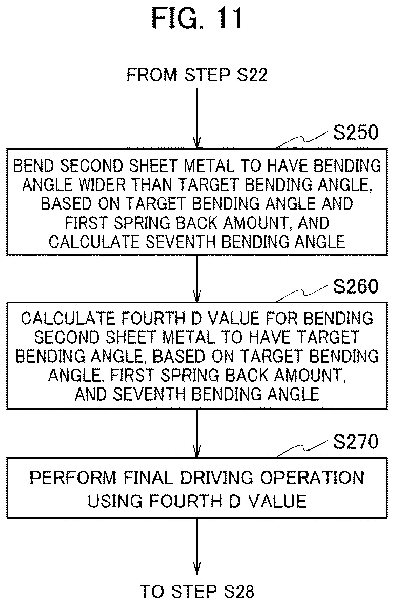

With reference to flowcharts shown in FIGS. 10 and 11, a description will be given regarding an operation performed by the press brake 100 and a press brake control method performed by the press brake 100. FIG. 10 shows a case where at least two sheet metals W are bent.

In FIG. 10, after the start of bending processing, in step S11, the NC device 10 performs bending of the first sheet metal W (first sheet metal W). Step S11 corresponds to the control operation performed by the NC device 10 shown in FIG. 4. At this time, for bending of the second sheet metal W and thereafter, the NC device 10 holds the bending angle θt1 (first bending angle), which is the temporary bending angle during the temporary bending period, the spring back amount (first spring back amount) during the SB calculation period, and the second D value at the time of the final driving operation during the driving period.

In step S21, the NC device 10 temporarily bends the next sheet metal W (second sheet metal W) and acquires the bending angle θt1 (fourth bending angle), which is the temporary bending angle during the temporary bending period. Step S21 corresponds to the temporary bending operation performed by the NC device 10 shown in FIG. 5.

In step S22, the NC device 10 determines whether the difference between the fourth bending angle and the first bending angle is within a predetermined angle. If the difference between the fourth bending angle and the first bending angle is within the predetermined angle (YES), in step S23, the NC device 10 performs the final driving operation using the second D value obtained in the driving operation of bending the first sheet metal W, and the processing proceeds to step S28. Step S23 corresponds to the driving operation by the NC device 10 shown in FIG. 6. As described above, in step S23, a corrected D value may be used instead of the second D value.

If the difference between the fourth bending angle and the first bending angle is not within the predetermined angle (NO) in step S22, the NC device 10 switches the period to the SB calculation period and calculates the spring back amount (second spring back amount) of the second sheet metal W in step S24. In step S25, the NC device 10 bends the second sheet metal W to have a bending angle wider than the target bending angle, based on the target bending angle and the second spring back amount, and calculates the bending angle θf1' (sixth bending angle).

In step S26, the NC device 10 calculates the third D value for bending the second sheet metal W to have the target bending angle, based on the target bending angle, the second spring back amount, and the sixth bending angle. In step S27, the NC device 10 performs the final driving operation of the second sheet metal W using the third D value, and the processing proceeds to step S28. Steps S24 to S27 correspond to the control operation performed by the NC device 10 shown in FIG. 7. The SB calculation period shown in FIG. 8A or FIG. 8B may be used instead of the SB calculation period shown in FIG. 7.

In step S28, the NC device 10 raises the upper table 1. In step S31, the NC device 10 determines whether there is a next sheet metal W to be bent. If there is a next sheet metal W (YES), the NC device 10 returns the processing to step S21, and repeats operations of step S21 and thereafter. Alternatively, if there is no next sheet metal W (NO), the NC device 10 ends the processing.

The NC device 10 may perform steps S250, S260, and S270 shown in FIG. 11 using the spring back amount (first spring back amount) obtained by bending the first sheet metal W, instead of steps S24 to S27. FIG. 11 is a modified example of the operation performed by the press brake 100 and the press brake control method performed by the press brake 100 shown in FIG. 10, and corresponds to the driving operation by the NC device 10 shown in FIG. 9.

In step S250, the NC device 10 bends the second sheet metal W to have a bending angle which is wider than the target bending angle, based on the target bending angle and the first spring back amount, and calculates the bending angle θf1" (calculates seventh bending angle). In step S260, the NC device 10 calculates the fourth D value for bending the second sheet metal W to have the target bending angle, based on the target bending angle, the first spring back amount, and the seventh bending angle. In step S270, the NC device 10 performs the final driving operation of the second sheet metal W using the fourth D value, and the processing proceeds to step S28.

The present invention is not limited to one or more embodiments described above, and various modifications are possible within a scope not departing from a scope of the present invention. In one or more embodiments described above, the upper table 1 is a slide table which can be raised and lowered, and the lower table 3 is a fixed table of which a position is fixed. However, alternatively the upper table 1 may be the fixed table and the lower table 3 may be the slide table. In this case, the table lifting mechanism 6 raises and lowers the lower table 3. The raising and lowering of the upper table 1 can be read as the lowering and raising of the lower table 3, respectively, and the lowering amount and the lowering amount of the upper table 1 are read as the raising amount and the raising amount of the lower table 3.

In one or more embodiments, the D value is the lowering amount of the punch Tp when the contact position where the distal end of the punch Tp contacts the sheet metal W is used as a reference. However, alternatively the D value may be a distance between a distal end of the die Td and the distal end of the punch Tp when a position of the distal end of the die Td is used as a reference. In this case also, the D value indicates a position of the distal end of the punch Tp in the height direction.

The present application claims priority based on Japanese Patent Application No. 2022-169403, filed with the Japan Patent Office on October 21, 2022 and Japanese Patent Application No. 2023-143043, filed with the Japan Patent Office on September 4, 2023, the entire disclosed content of both of which is incorporated herein by reference.

## Claims

1. A press brake comprising:
an upper table on which a punch is mounted;
a lower table on which a die is mounted;
a table lifting mechanism configured to raise and lower the upper table or the lower table;
an angle sensor configured to measure an angle of a sheet metal, when the table lifting mechanism raises and lowers the upper table or the lower table and bends the sheet metal, while the sheet metal is interposed between the punch and the die; and
a control device configured to calculate a bending angle of the sheet metal based on an angle of the sheet metal measured by the angle sensor and configured to control the table lifting mechanism to lower the upper table or to raise the lower table, wherein
when the control device performs control to bend a first sheet metal of a plurality of sheet metals that are made of the same material and that have the same thickness,
the control device performs control to lower the upper table by a first depth value or to raise the lower table by the first depth value such that the first sheet metal is bent to have a temporary bending angle wider than a target bending angle,
while the upper table is lowered by the first depth value or the lower table is raised by the first depth value, the control device calculates a first bending angle of the first sheet metal based on an angle of the first sheet metal measured by the angle sensor and holds the first bending angle,
the control device removes a load applied to the first sheet metal, while keeping a state in which the punch is in contact with the first sheet metal, and calculates a second bending angle of the first sheet metal of which the load is removed, based on the angle of the first sheet metal measured by the angle sensor,
using the first bending angle or a bending angle when the first sheet metal is bent to have a bending angle narrower than the first bending angle before the load applied to the first sheet metal is removed as a reference angle for calculating a spring back amount, the control device calculates a first spring back amount of the first sheet metal based on a difference between the second bending angle and the reference angle,
while the upper table is lowered or the lower table is raised, the control device calculates a third bending angle of the first sheet metal based on the angle of the first sheet metal measured by the angle sensor such that the first sheet metal of which the load is removed is bent to have a bending angle wider than the target bending angle, based on the target bending angle and the first spring back amount,
the control device calculates a second depth value for bending the first sheet metal, that has been bent to have the third bending angle, to have the target bending angle, based on the target bending angle, the first spring back amount, and the third bending angle and holds the second depth value,
the control device performs control to lower the upper table by the second depth value or to raise the lower table by the second depth value, and after the first sheet metal is bent to have the target bending angle, the control device raises the upper table or lowers the lower table and ends bending of the first sheet metal,
when the control device performs control to bend a second sheet metal that is a second sheet metal and thereafter of the plurality of sheet metals,
the control device performs control to lower the upper table by the first depth value or to raise the lower table by the first depth value such that the second sheet metal is bent to have the temporary bending angle,
while the upper table is lowered by the first depth value or the lower table is raised by the first depth value, the control device calculates a fourth bending angle of the second sheet metal based on an angle of the second sheet metal measured by the angle sensor,
the control device determines whether a difference between the fourth bending angle and the first bending angle is within a predetermined angle, and
if the difference between the fourth bending angle and the first bending angle is within the predetermined angle, the control device does not calculate a spring back amount of the second sheet metal, but performs control to lower the upper table by the second depth value or by a corrected depth value obtained by correcting the second depth value according to the difference between the fourth bending angle and the first bending angle, or performs control to raise the lower table by the second depth value or by the corrected depth value, and after the second sheet metal, that has been bent to have the temporary bending angle, is bent to have the target bending angle, the control device raises the upper table or lowers the lower table and ends bending of the second sheet metal.

2. The press brake according to claim 1, wherein
when the control device performs control to bend the second sheet metal,
if the difference between the fourth bending angle and the first bending angle is not within the predetermined angle, while keeping a state in which the punch is in contact with the second sheet metal, the control device removes a load applied to the second sheet metal, and calculates a fifth bending angle of the second sheet metal based on the angle of the second sheet metal measured by the angle sensor,
the control device calculates a second spring back amount of the second sheet metal based on a difference between the fifth bending angle and the fourth bending angle,
while the upper table is lowered or the lower table is raised, the control device calculates a sixth bending angle of the second sheet metal based on the angle of the second sheet metal measured by the angle sensor such that the second sheet metal of which the load is removed is bent to have a bending angle wider than the target bending angle, based on the target bending angle and the second spring back amount,
the control device calculates a third depth value for bending the second sheet metal, that has been bent to have the sixth bending angle, to have the target bending angle, based on the target bending angle, the second spring back amount, and the sixth bending angle, and
the control device performs control to lower the upper table by the third depth value or to raise the lower table by the third depth value, and after the second sheet metal is bent to have the target bending angle, the control device raises the upper table or lowers the lower table and ends bending of the second sheet metal.

3. The press brake according to claim 2, wherein
the control device reflects a raising amount in which the upper table is raised or a lowering amount in which the lower table is lowered for removal of the load applied to the first sheet metal up to a middle step before the removal of the load ends, or a raising amount in which the upper table is raised or a lowering amount in which the lower table is lowered until the removal of the load applied to the first sheet metal ends, to a raising amount in which the upper table is raised or a lowering amount in which the lower table is lowered for removal of the load applied to the second sheet metal.

4. The press brake according to claim 1, wherein
when the control device performs control to bend the second sheet metal,
if the difference between the fourth bending angle and the first bending angle is not within the predetermined angle, the control device does not calculate the spring back amount of the second sheet metal, and while the upper table is lowered or the lower table is raised, the control device calculates a seventh bending angle of the second sheet metal based on the angle of the second sheet metal measured by the angle sensor such that the second sheet metal, that has been bent to have the temporary bending angle, is bent to have a bending angle wider than the target bending angle, based on the target bending angle and the first spring back amount,
the control device calculates a fourth depth value for bending the second sheet metal, that has been bent to have the seventh bending angle, to have the target bending angle, based on the target bending angle, the first spring back amount, and the seventh bending angle, and
the control device performs control to lower the upper table by the fourth depth value or to raise the lower table by the fourth depth value, and after the second sheet metal is bent to have the target bending angle, the control device raises the upper table or lowers the lower table and ends bending of the second sheet metal.

5. A press brake control method performed by a control device configured to control a press brake including: an upper table on which a punch is mounted; a lower table on which a die is mounted; a table lifting mechanism configured to raise and lower the upper table or the lower table; and an angle sensor configured to measure an angle of a sheet metal that is interposed between the punch and the die and is bent, the press brake control method comprising:
when performing control to bend a first sheet metal of a plurality of sheet metals that are made of the same material and that have the same thickness;
performing control to lower the upper table by a first depth value or to raise the lower table by the first depth value such that the first sheet metal is bent to have a temporary bending angle wider than a target bending angle;
while the upper table is lowered by the first depth value or the lower table is raised by the first depth value, calculating a first bending angle of the first sheet metal based on an angle of the first sheet metal measured by the angle sensor and holding the first bending angle;
removing a load applied to the first sheet metal, while keeping a state in which the punch is in contact with the first sheet metal, and calculating a second bending angle of the first sheet metal of which the load is removed, based on the angle of the first sheet metal measured by the angle sensor;
using the first bending angle or a bending angle when the first sheet metal is bent to have a bending angle narrower than the first bending angle before the load applied to the first sheet metal is removed as a reference angle for calculating a spring back amount, calculating a first spring back amount of the first sheet metal based on a difference between the second bending angle and the reference angle;
while the upper table is lowered or the lower table is raised, calculating a third bending angle of the first sheet metal based on the angle of the first sheet metal measured by the angle sensor such that the first sheet metal of which the load is removed is bent to have a bending angle wider than the target bending angle, based on the target bending angle and the first spring back amount;
calculating a second depth value for bending the first sheet metal, that has been bent to have the third bending angle, to have the target bending angle, based on the target bending angle, the first spring back amount, and the third bending angle and holding the second depth value;
performing control to lower the upper table by the second depth value or to raise the lower table by the second depth value, and after bending the first sheet metal to have the target bending angle, raising the upper table or lowering the lower table and ending bending of the first sheet metal;
when performing control to bend a second sheet metal that is a second sheet metal and thereafter of the plurality of sheet metals;
performing control to lower the upper table by the first depth value or to raise the lower table by the first depth value such that the second sheet metal is bent to have the temporary bending angle;
while the upper table is lowered by the first depth value or the lower table is raised by the first depth value, calculating a fourth bending angle of the second sheet metal based on an angle of the second sheet metal measured by the angle sensor;
determining whether a difference between the fourth bending angle and the first bending angle is within a predetermined angle; and
if the difference between the fourth bending angle and the first bending angle is within the predetermined angle, without calculating a spring back amount of the second sheet metal, performing control to lower the upper table by the second depth value or by a corrected depth value obtained by correcting the second depth value according to the difference between the fourth bending angle and the first bending angle, or performing control to raise the lower table by the second depth value or by the corrected depth value, and after the second sheet metal, that has been bent to have the temporary bending angle, is bent to have the target bending angle, raising the upper table or lowering the lower table and ending bending of the second sheet metal.

6. The press brake control method according to claim 5, wherein
when the control device performs control to bend the second sheet metal,
if the difference between the fourth bending angle and the first bending angle is not within the predetermined angle, while keeping a state in which the punch is in contact with the second sheet metal, the control device removes a load applied to the second sheet metal, and calculates a fifth bending angle of the second sheet metal based on the angle of the second sheet metal measured by the angle sensor,
the control device calculates a second spring back amount of the second sheet metal based on a difference between the fifth bending angle and the fourth bending angle,
while the upper table is lowered or the lower table is raised, the control device calculates a sixth bending angle of the second sheet metal based on the angle of the second sheet metal measured by the angle sensor such that the second sheet metal of which the load is removed is bent to have a bending angle wider than the target bending angle, based on the target bending angle and the second spring back amount,
the control device calculates a third depth value for bending the second sheet metal, that has been bent to have the sixth bending angle, to have the target bending angle, based on the target bending angle, the second spring back amount, and the sixth bending angle, and
the control device performs control to lower the upper table by the third depth value or to raise the lower table by the third depth value, and after the second sheet metal is bent to have the target bending angle, the control device raises the upper table or lowers the lower table and ends bending of the second sheet metal.

7. The press brake control method according to claim 6, wherein
the control device reflects a raising amount in which the upper table is raised or a lowering amount in which the lower table is lowered for removal of the load applied to the first sheet metal up to a middle step before the removal of the load ends, or a raising amount in which the upper table is raised or a lowering amount in which the lower table is lowered until the removal of the load applied to the first sheet metal ends, to a raising amount in which the upper table is raised or a lowering amount in which the lower table is lowered for removal of the load applied to the second sheet metal.

8. The press brake control method according to claim 5, wherein
when the control device performs control to bend the second sheet metal,
if the difference between the fourth bending angle and the first bending angle is not within the predetermined angle, the control device does not calculate the spring back amount of the second sheet metal, and while the upper table is lowered or the lower table is raised, the control device calculates a seventh bending angle of the second sheet metal based on the angle of the second sheet metal measured by the angle sensor such that the second sheet metal, that has been bent to have the temporary bending angle, is bent to have a bending angle wider than the target bending angle, based on the target bending angle and the first spring back amount,
the control device calculates a fourth depth value for bending the second sheet metal, that has been bent to have the seventh bending angle, to have the target bending angle, based on the target bending angle, the first spring back amount, and the seventh bending angle, and
the control device performs control to lower the upper table by the fourth depth value or to raise the lower table by the fourth depth value, and after the second sheet metal is bent to have the target bending angle, the control device raises the upper table or lowers the lower table and ends bending of the second sheet metal.
